(19) **Europäisches Patentamt**

**European Patent Office**

**Office européen des brevets**

(11) **EP 1 335 473 A2**

(12) **EUROPEAN PATENT APPLICATION**

(43) Date of publication:
**13.08.2003 Bulletin 2003/33**

(51) Int Cl.⁷: **H02J 3/14**

(21) Application number: **03002568.8**

(22) Date of filing: **06.02.2003**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **08.02.2002 US 354965 P**
**04.02.2003 US 357204**

(71) Applicant: **General Dynamics Ordnance and Tactical Systems, Inc.**
**St. Petersburg, Florida 33716-3807 (US)**

(72) Inventor: **Jouper, Jeffrey**
**Renton, Washington (US)**

(74) Representative: **Hirsch, Peter, Dipl.-Ing.**
**Klunker Schmitt-Nilson Hirsch**
**Winzererstrasse 106**
**80797 München (DE)**

(54) **System power control using multiple power levels**

(57)     An embodiment of the present invention comprises apparatus for and method of managing and distributing power from a supply of limited power. A plurality of outlets is connected to a plurality of power units. In accordance with the present invention, an amount of power drawn by the outlets is measured and compared to a first predetermined electrical power level and a second predetermined electrical power level. When the amount of measured power being drawn exceeds the second predetermined maximum electrical power level, all outlets are disabled. When the amount of measured power being drawn is less than both the first predetermined electrical power level and the second predetermined electrical power level, all outlets are enabled. When the amount of measured power being drawn exceeds the first predetermined electrical power level, outlets currently in use by a power utilizing device are enabled while outlets not currently in use by a power utilizing device are disabled.

**FIG. 1**

**Description**

**Field of the Invention**

The invention relates generally to supplying power to one or more electrical loads and, more particularly, to managing the supply of power to loads in a limited power environment sucli as, for example, on a transportation vehicle such as, for example, aircraft, buses, cruise ships, trains and the like.

**Cross Reference To Related Applications**

This application is related to commonly assigned U.S. Patent Nos. 5,754,445, entitled "Load Distribution and Management System," by Jeffery Jouper et al., issued May 19, 1998, and 6,046,513, entitled "Load Distribution and Management System," by Jeffery Jouper et al., issued April 4, 2000. The disclosures of these U.S. patents are incorporated by reference herein in their entireties. This application claims priority from U.S. Provisional Patent Application serial number 60/354,965 entitled "System Power Control Using Multiple Power Levels," filed on February 8, 2002, the disclosure of which is incorporated by reference herein in its entirety.

**Background of the Invention**

Transportation systems, such as an aircraft, a ship, or a train, typically provide only a limited supply of power. This power supply serves not only those systerns that are essential, but non-essential equipment as well. In an aircraft, for example, the propulsion systern provides a finite amount of power to operate both essential equipment, such as life-support, communication, and flight control, and non-essential equipment, such as coffee makers, in-flight comniercial phones, and in-seat entertainment centers.

Because power is limited, non-essential equipment must compete with other non-essential equipment for power. If the load from non-essential equipment exceeds the allowable load, some essential equipment may be deprived of power. Furthermore, the power supply itself may be damaged from the additional loads.

Passengers seated on transportation vehicles may wish to pass travel time by using devices such as video, audio and Internet data. Aircraft passenger seats can be configured with power consuming elements such as receiver components, loud speakers, video comiections, control elements and reading lamps. Typically, an energy source, such as an in Seat Power Supply (ISPS) is allocated to each specific seat for powering the components. As devices used in personal and business computing become more vaijed, the need for modifications to electrical power systems to service such devices may become more frequent Accordingly, a power management system for transportation vehicles is needed that supports and services the needs of current and fliture travelers.

Conventional power monitoring systems measure the amount of power being drawn from a power supply. When the amount of power being drawn of the power supply exceeds a limit, the power monitoring systems determine which equipment to turn off or cause to enter power saving modes. The technique(s) of monitoring and adjusting power requirements of load are commonly referred to as load-shedding.

Load-shedding systems typically require a controller to individually communicate whether a load is to be shed or reconfigured. In such systems, each load can be provided its own communication control line or all of the loads can be daisy chained.

Some load monitoring systems allow a plurality of load control units to determine which loads to shed or reconfigure based upon a consumption rate broadcast from a control monitoring processor.

Conventional power monitoring and control systems are complex and typically irivolve a priority scheme based on load importance.

Accordingly, a Load distribution and management system is needed that prevents excessive power consumption while maximizing availability of power to simultaneous loads.

Furthermore, a load distribution and management system is needed that prevents additional load from coming on-line until additional power is available, and minimizes the need to shed current loads.

**Summary of the Invention**

As noted in the aforementioned U.S. patents, Master Control Units (MCUs) monitor and distribute power within a limited power environment. This invention supplements the prior art by providing an apparatus for utilization of two power levels to control the power load in single and multiple MCU configurations.

The system and method of the present invention provide power and power management for nonshedable load such seat motors and for shedable load such as personal electronic devices. An advantage of the present invention is that provides system power control using multiple power levels.

The MCU is provided power from the aircraft power supply. The MdU facilitates supplying power to one or more loads referred to as P1 and P2. P1 and P2 have associated programmable power limit levels P1' and P2', also referred to as thresholds. P1, P2 and thresholds P1' and P2' are used to facilitate ltxniting consumed power $P_C$ within a limited power system such as the power supply system in an aircraft or other trarisportation vehicle. In an embodiment of the system of the present invention P1 represents a power load and is used to control, for example, ISPSs while P2 represents another power load and is used to control other systems (including, but not limited to, higher priority systems such as seat motor actuators, reading lamps and other passenger comforts and non-shed able loads).

P1 is associated with a first threshold P1' of power that is used to make decisions regarding whether the system will switch JSPSs to RESTRICTED, DISABLED OR RE-ENABLED modes. P2 is associated with a second threshold P2' of power that is used to make decisions regarding whether the system will switch ISPSs to RESTRICTED, DISABLED OR RE-ENABLED modes. The decision can be based upon the amount of non-shedable load $P_{NS}$ being used by higher priority systems such as seat motor actuators, reading lamps and other passenger comforts and non-shedable loads.

An advantage of the embodiments of the present invention is that they utilize power levels to control the maximum power in single and multiple MCU configurations so that users of devices such as personal electronic devices (PEDs) experience less disruption in power than has been previously experienced. Other advantages of the invention will in part be obvious and will in part be apparent from the specification. The aforementioned advantages are illustrative of the advantages of the present invention.

## Description of the Drawings

In describing the present invention, features of the invention are not necessarily shown to scale. Also, reference will be made herein to **Figures 1-5** of the drawings in which like ntirnerals refer to like features of the invention and in which;

Figure 1 is a block diagram of an embodjinent of the system of the present invention illustrating a single a control Unit MCU;

Figure 2 is a block diagram of an alternate embodiment of the system of present invention illustrating multiple MCUs and separate ISPS groups;

Figure 3 is a flow chart of an embodiment of the method present invention illustrating a method of Controlling Power Using Multiple Power Levels;

Figure 4 is a graphical representation of total power load and the points at which the system of the present invention switches to the RESTRICTED, DISABLED OR RE-ENABLED states; and

Figure 5 is a block diagram of an alternate embodiment of the system of the present invention illustrating the implementation of a single power management unit and a single aircraft power bus

## Detailed Description of the Present Invention

The present invention overcomes the disadvantages of the prior art by providing an apparatus and method for utilization of two power levels to control the maximum power in single and multiple Master Control Unit (MCU) configurations. Note that the MCU may also be referred to as an Enhanced Master Control Unit (EMCU) or an Advanced Master Control Unit (AMCU).

## SYSTEM

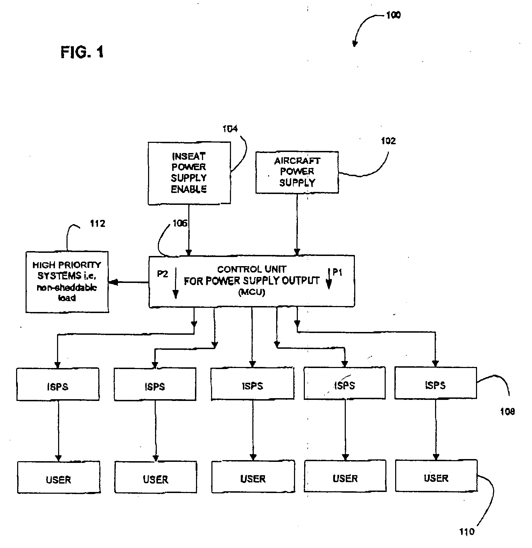

**Figure 1** is a block diagram of an embodiment of a system 100 of the present invention illustrating a power supply 102, an ENABLE input signal 104 to the MCU, a control. unit or MCU 106 preferably configured with a plurality of independently controlled colwnii outputs (Em exemplary number of five (5) column outputs is illustrated) that supply power and operational control to the ISPSs 108. The colurnu outputs supply power to associated ISPSs 108 available to users 110 in a transportation vehicle (not shown) such as an aircraft. While described and illustrated herein in terms of aircraft, the claimed Systems and methods may be utilized with other sources of limited power as recited above. If an EMCU is used, the preferred EMCU is BMCU-GD model 1100-X manufactured by General Dynamics Advanced Information Systems of Redrnond, WA the assignee of the present invention. If an AMCU is used, the preferred AMCU is AMCU-GD model 1176-X manufactured by General Dynamics Advanced Information Systems of Redmond, WA. The MCU provides power management and distribution. for defined zones within an aircraft. In the preferred MCU, five independently controlled column outputs supply power and operational control for seat motors, reading lights, etc. The MCU controls the number of ISPS outputs that maybe operated at any given time depending on aircraft power budgeted for the system.

The MCU 106 is provided power from the aircraft power supply 102. The MCU facilitates supplying power to one or more loads referred to as P1 and P2 that are rioted for illustraflon purposes in Figure 1 as arrows P1 and P2 in MCU 106. P1 and P2 have associated programmable power limit levels P1' and P2', also referred to as thresholds. P1, P2 and thresholds P1' and P2' are used to facilitate limiting consumed power $P_C$ within a limited power system such as the power supply system 102 in an aircraft or other transportation vehicle. In the embodiment of Figure 1, P1 represents a power load and is used to control, for example, ISPSs 108 while P2 represents another power load and is used to control other systems (including, but not limited to, higher priority systems 112 such as seat motor actuators, reading lamps and other. passenger comforts and non-shedable loads).

P1 is associated with a first threshold P1' of power that is used to make decisions regarding whether the system 100 will switch ISPSs 106 to RESTRICTED, DISABLED OR RE-ENABLED modes. P2 is associated with a second threshold P2' of power that is used to make decisions regarding whether the system 100 will switch ISPSs 106 to RESTRICTED, DISABLED OR RE-ENABLED modes. The decision can be based upon the amount of non-shedabic load $P_{NS}$ being used by higher priority systems 112 such as seat motor actuators, reading lamps and other passenger comforts and non-shedable loads.

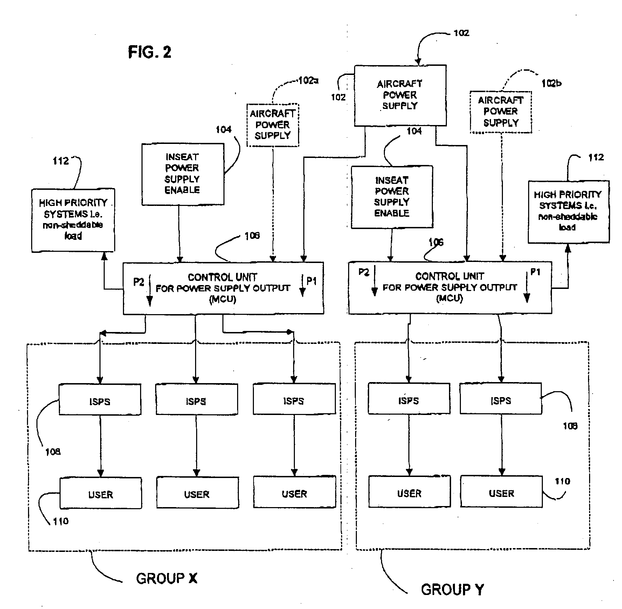

**Figure 2** is a block diagram for an alternate embodiment of a system 200 of the present invention. The embodiment of Figure 2 is similar to the embodiment of Figure 1, however, the system 200 includes multiple MCUs 106 and separate ISPS 108 groups. The number of MCUs, ISPSs and users illustrated in Figure 2 is shown for illustration purposes and is not intended to limit the multiple MCU system 200 of the present invention. The system 200 comprises a power supply 102, an ENABLE input signal 104 to each MCU and two or more control units or MCUs 106. Each MCU is preferably configured with independently controlled column outputs that supply power and operational control to a distinct group (such as group **X** or group **Y** illustrated in Figure 2) of ISPSs and associated users 110. If an EMCU is used, the preferred EMCU is EMCU-GD model 1100-X manufactured by General Dynamics Advanced Information Systems of Redmond, WA. If an AMCU is used, the preferred AMCU is AMCU-GD model 1176-X manufactured by General Dynamics Advanced Information Systems of Redmond, WA. The MCU provides power management and distribution for defined zones within an aircraft. In the preferred MCU, five independently controlled column outputs supply power and operational control for seat motors, reading lights, etc. The MCU controls the number of ISPS outputs that may be operated at any given time depending on aircraft power budgeted for the system.

Each MCU 106 supphes a separate group of ISPSs with power and confrol data. The power supply 102 is connected to each MCU 106, as is the ENABLE signal 104. Each MCU 106 facilitates supplying power to one or more loads referred to as P1 and P2 and noted for illustration purposes with arrows P1 and P2 in MCUs 106. P1 and P2 have programmable power limit levels P1' and P2', also referred to as thresholds. P1, P2 and thresholds P1' and P2' are used to facilitate limiting consumed power $P_C$ within a limited power system such as the power supply system 102 in a transportation vehicle. In the embodiment of Figure 2, P1 represents a power load and is used to supply power and control, for example, to group X of ISPSs 108 and P2 represents another power load and is used to control other systems (including, but not limited to, higher priority systems 112 such as seat motor actuators, reading lamps and other passenger comforts).

In the system 200 of Figure 2, P1 is associated with a first threshold P17 and with a first MCU that is used to make decisions regarding whether to switch an associated group of ISPSs 106 to RESTRICTED, DISABLED OR RE-ENABLED modes. P2 is associated with a second threshold P2' of power that is used to make decisions regarding whether to switch an associated group of ISPSs 106 to RESTRICTBD, DISABLED OR RE-ENABLED modes. The decision can be based upon the amount of non-shedable load $P_{NS}$ being used by higher priority Systems 112 (described above).

## METHOD

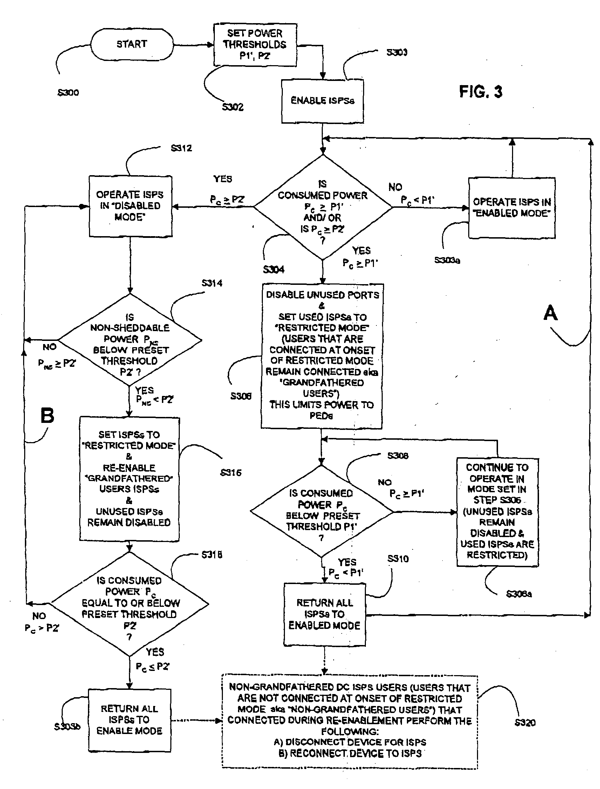

**Figure 3** is a flow chart of an embodiment of the present invention illustrating the method of controlling power using multiple power levels. The flow chart represents the method performed by system 100 which is a subset of the multi MCU system 200. At step S300 the method begins. At step S302 power thresholds P1' and P2' are set. As would be understood by one of ordinary skill in the art, power values used for the calculations of P1' and P2' can be taken from aircraft data and desired level of user utilization.

At step S303, a signal is sent to the MCU to ENABLED the ISPSs, The MCU monitois the power consumed on each of, for example, five (5) output chains (such as, ISPSs) and controls each of the output chains. Next, at step S304 a query is made as to whether consumed power $P_C$ is greater than or equal to P1' and / or greater than or equal to P2'. The method as it relates to the P1' threshbld is described first. The method as it relates to the P2' threshold is described below.

The steps of the method as they reiates to the P1' threshold are described next. If the answer to the query of step S304 is yes, that $P_C \geq P1'$, step 306 follows and unused ISPSs are DISABLED and ISPSs that are in use are RESTRICTED. This step limits the power provided to the ISPSs and associated *Grandfathered Users* (users who are plugged into the system prior to operation in the RESTRICTED mode) to the load that was in use when the ISPSs became PESIkICTED. Note that attaining the consumed power $P_C$ threshold P1' ($P_C \geq$ P1) causes the ISPSS to operate in the RESTRICTED mode. *Grandfatheted Users* continue to receive power. Next, at step S308, a query is made as to whether consumed power is less than threshold P1'. If the answer to the query is no, $P_C \geq$ P1' the flow chart notes block S306a which represents a continued operation of the state described in step S306 where unused ISPSs (also referred to as ports) remain DISABLED and used ISPSs remain RESTRICTED. If the answer to the query of step S308 is yes, $P_C$<P1' then next at step S310, all ISPSs are returned to the ENABLED mode.

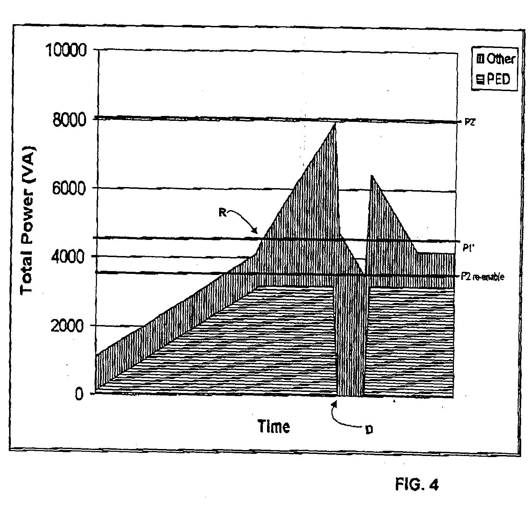

Returning to Step S304, if the answer to the query is no, $P_C$ <P1', step S303a represents the ISPSs continued operation in the BNABLED mode. The MCU switches the down stream ISPSs to DISABLED until the consumed power $P_C$ falls below threshold P1. In previously available Systems, power may be redistributed or users shed when threshold P1' is attained. In those systems, the control signal is ENABLED for ISPSs but not for other seat mounted equipment. These previously available Systems have not used the ENABLE sigrial sent to the ISPS for control of other seat mounted equipment such as seat motor actuators and such However, the system of the present invention monitors the ENABLE signal and places the system in RESTRICTED mode (a "power save" mode) to reduce the power load on the aircraft. The RESTRICTED mode causes for example, a seat to move at half speed. In the system of the present invention it is assumed that the ISPS is controllable load and certain other seat mounted equipment is non-shedable. Returning to the flow chart of Figure 4, following step S304, power mom-toting continues as is represented by path A; the system 100 continues operation of monitoring the power as described in steps S304 through S310.

Returning again to step S304, the method as it relates to the P2' threshold is described next. As noted above P2 and P2' are related to higher priority Systems and non-shedable load. If the answer to the query of step S304 is yes, consumed power $P_C \geq$ P2', then next at step S312 the ISPSs are DISABLED. Next at step S314, a query is made as to whether non-shedable power $P_{NS}$ is less than the threshold P2'. If the answer to the query is yes, $P_{NS}$ < P2' then at step S316 ISPSs are set to RESTRICTED mode where *Grandfathered Users* are RE-ENABLED and ports that were unused prior to being DISABLED in step S312 remain DJSABLED. If the answer to the query of step S314 is no, non-shedable power $P_{NS} \geq$ P2' then the ISPSs remain DISABLED as is reflected in step 5312

Following step 5316, at step S318 a query is made as to whether the consumed power is less than or equal to P2'. If the answer to the query of step S318 is no, consumed power $P_C$ > P2', then the ISPSs remain disabled as is reflected in step S312. If the answer to the query of step S318 is yes, consumed power $P_C \leq$P2', then all ISPSs are returned to the enabled mode as is reflected in step S303b. Power monitoring continues and as is represented by path B; the system 100 continues operation of monitoring. the power as described in steps S312 through S318.

An optional step S320 follows steps S310 and S303b. In step S320, users that are not connected at onset of RESTRICTED mode (*"NON-GRANDFATHERED USERS"*) that connected during re-enablement (of DC ISPSs) perform the following: A) disconnect device from ISPS; and B) reconnect device to ISPS. It is assumed that the ISPS can re-enable its active outputs when the system is returned below the mixumum P2' levet, retunung the system to the RESTRICTED mode of operation. The AC ISPSs will be tolerant ofthe RESTRICTED mode of operation and not require the users to unplug in order to re-enable output power.

The present invention uses P2 and threshold P2' to control the alternate use of non-shedable power and the use of consumed power. When non-shedahie power is below a threshold P2' the ISPSs mode is changed from DISABLED TO ENABLED. *Grandfathered Users* are re-enabled and unused ports remain DISABLED. In this embodiment, the power limit function (i.e. RESTRICTED, ENABLED, DISABLED) controls unused outlets.

Steps S312 and S314 provide additional control is to the MCU to disable the ISPS outputs under certain conditions such as another system with higher priority requiring additional power. P2 is programmed to a level required by the system to set the ISPSs to the DISABLED mode. This removes power from the ISPS outputs regardless of user status (*Grandfathered or Non-Grandfathered Users*). When power is again available to the ISPSs due to the higher priority systems no longer requinng additional power, the ISPSs RE-ENABLED and return to the previous state of operation. As would be understood by one of ordinsry skill in the art, DC versions of the ISPS would require a hardware change to operate under the conditions of the system of the present invention in order to perform RE-ENABLEMENT. This operation would allow for full operation of higher priority (non-shedable) systems such as seat motor actuators during peak usage periods without exceeding the power budgeted for the system since these are nonshedable loads. In addition, if this function were implemented with multiple MCUs a single power bus could feed several MCU units and subordinate systems. Alternately, as is shown in Figure 2, multiple busses could feed multiple MCU units. Dashed lines illustrate the multiple power supplies 102a and 102b of the alternate embodiment.

## EXAMPLES

The following examples are intended to illustrate calculations that may be used for thresholds P1' and P2' as well as other power values associated with the system and method of the present invention:

## 1) Example with single MCU

With a single MCU as is illustrated in the system 100 of Figure 1, power is managed by first going into the RESTRICTED mode of operation and if P2 is exceeded, placing the ISPS units in the DISABLED mode. For this example, it is assumed that the ISPS can re-enable its active outputs when the system is returned below the minimum P2' level, returning the system to the RESTRICTED mode of operation. The AC ISPS will be tolerant of this mode of operation and not require the users to unplug in order to re-enable output power.

As an example exercise for this type of system the following data is used:

*Load Parameter:*

| | |
|---|---|
| Budgeted Power | 8KVA(available to the MCU) |
| Total Pax positions | 70 (passenger location/seat) |
| Total Power Required: | |
| PED Power: | 5.25 KVA (70@75VA each) |
| Other equipment: | 6.3 KVA (Non-Shedable Power)  (70@90VA each) |
| Total Power = | 11.5 KVA (PED Power + Other Equipment) |
| (Total power) - (Budgeted power) = 3.5 KVA | |

*System Settings:*

$$P1 = \text{Budgeted Power - Non-shedable Power} = 1.7KVA$$

*Operating Parameters:*

Assume 32% maximum use of PED (personal electronic device) power without Other Equipment load. If additional loads are measured by the MCU, that power will reduce further the utilization of PED power.

This model shows that the total power the system could require is 3.5KVA over the total power budgeted. This requires power management to ensure that the total budgeted power is not exceeded. With previously available systems bavmg only the P1 function, the maximum power available to PED power would be:

$$\text{Budgeted Power - Non-Shedable Power} = 8 \text{ KVA-}6.3 \text{ KVA} = 1.7KVA.$$

Therefore, the P1 threshold would be set to 1.7 KVA, limiting the total number of passengers using PED power to 1.7 KVA or 1700/75VA per Pax (passenger location/seat) equals 22.67 This limits the utilization of PEDs by only allowing a maximum of 32 percent of the passengers to be using PED power at a time.

Because the 6.3 KVA of non-shedable load is generally transient load, seat motors, reading lamps and other passenger comforts, much of the power allocated is not utilized. To maximize the use of this power a second threshold P2 would need to be activated

For the same scenario, P1 would be increased to allow for the maximum nuxnber of passengers desired. P2 would be set for (Budgeted Power) minus 5% which equals 7.6KVA. In addition to the P2 trip point auother P2 related threshold would need to be set. This threshold represents the (Budgeted Power) minus (PED Power). For our example,

| Budgeted Power | 8KVA (available to the MCU) |
|---|---|
| Total Pax (passenger location/seat) positions 70 | |
| Total Power Required: | |
|   PED Power: | 5.25 KVA (70@75VA each) |
|   Other equipment: | 6.3 KVA (non-shedable Power) (70@90VA each) |
|   Total Power =: | 11.5 KVA |
| (Total power) - (Budgeted power) = 3.5 KVA | |
| Availability Required 80% | |

*System Settings:*

P1 = PED Power * Availability required = 5.25KVA * 80% = 4.2KVA
P2 = Budgeted Power * 95% = 7.6KVA
P2 re-enable = P2 - P1 = 3.4 KVA

*Operating Parameters:*

80% maximum use of PED Power without Other Equipment load, if additional loads are measured by the MCU, that power will reduce further the utilization of PED power. By using the additional power thresholds the system would operate as follows:

*Power increase in system reaches P1:*

a. ISPS placed in RESTRICTED MODE to limit FED Power
b. Un-used outlet units are disabled
c. FED power no longer increases

*Power increase in non-shedable loads increase and PED power stays constant until P2 is reached:*

a. ISPS DISABLED shutting off all outlets
b. Power immediately decreases but remains above P2 re-enable *Non-shedable loads decreases below P2 re-enable point and:*

a. ISPS placed in RESTRICTED MODE;
b. Passengers plugged in prior to P1/P2 activation regain power (RE-ENABLED); and
c. Un-used outlets remain DISABLED.

*If power is then under P1' limit:*

a. ISPSs are switched to ENABLED MODE; and
b. All outlets re-enabled with the exception of outlet where users plugged in during the P1/P2 activation period (*Non-grandfathered Users*). The *Non-grandfathered Users* need to un-plug and plug back in again in order to become ENABLED.

**Figure 4** represents an example of the power sensed by the MCU 106 during operation. The area identified as *PED* power represents power consumed by passengers using laptop power or other non-essential loads. The area identified as *Other* represents power consumed by seat motor actuators or other equipment of higher priority.

**Figure 4** corresponds to **Example 1** above and represents load over time. Assume that the power for PEDs (Personal Electronic Devices) at time 0 is zero VA. As time goes by, users begin to plug in and use power from the system 100. This continues until the sum of the PED power and *Other* power reaches threshold P1' (4.2KVA as calculated above) illustrated at point **R** in **Figure 4.** At point **R,** the system 100 is placed into RESTRICTED mode and unused power outlets are DISABLED. At this point only essential power consuming devices may continue to draw additional power. As the total power consumed reaches P2', the PED power is DISABLE and falls to zero power as is illustrated at point **D** in **Figure 4**. The PED power will remain at zero until the total power is below the P2 RE-ENABLE threshold. When P2 RE-ENABLE threshold level is reached, the PED power is then re-enabled in the RESTRICTED mode. This allows users who previously had power (*Grandfathered Users*) to regain power. However, power to un-used outlets is still not available. As the power falls below the P1' threshold, the un-used outlets are again ENABLED and the system is placed back in the ENABLED mode of operation.

## 2) Example with multi-MCU

As an operating example, it is assumed that the system has a power bus capable of supplying 15KVA and an operating budget for power is ten percent less than the power bus supply level or 13.5KVA. The operating budget is the total amount of power available for four MCU systems. An auxiliary control device such as an IFE (In Flight Entertainment) controller or an MCU set as the system master could be used to monitor and manage all four MCUs. The IFE Controller is a network server that can be used to process power programs for controlling single or multiple MCU systems. Total power budget calculation is shown below.

As an example exercise for this type of system the following data is used:

*Load Parameter:*

| Total Power: | 15KVA |
| --- | --- |
| Budget Power: | 13.5KVA |
| Number of MCU Systems: | 4 |
| Each MCU has the following loads: | |
|   4KVA for laptop power | |
|   3KVA for seat equipment (non-shedable) | |

Total Bus Power

    a. MCUs * laptop power = 16KVA for laptop power
    b. MCUs * seat motors = 12KVA for seat equipment (non-shedable)

Total power needed:

$$a+b= 28KVA$$

PROBLEM: Total power of 28KVA exceeds 13.5KVA power budget by 14.5KVA (28KVA-13.5KVA)

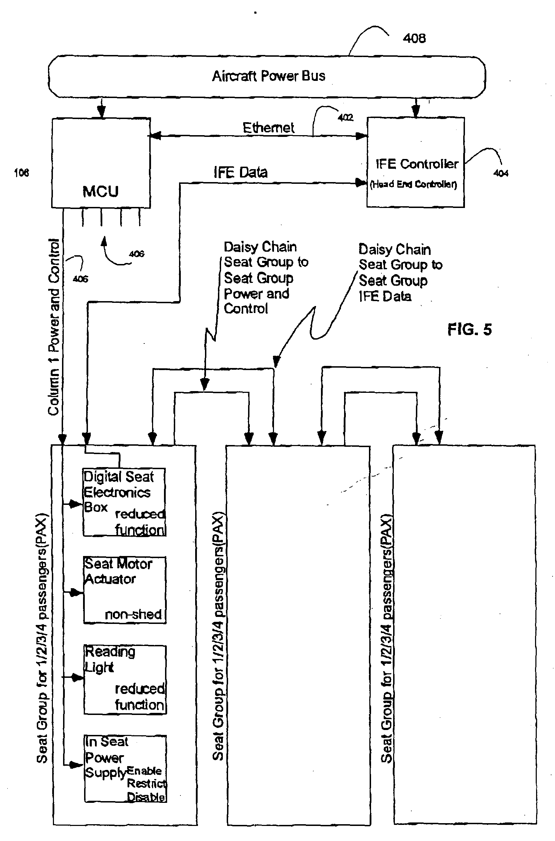

In the Single MCU system, P2 is local to the MCU. In the present example multiple MCU system 400 of Figure 5, each MCU reports data back to a single total power management unit. As is illustrated in Figure 5, an embodiment of the system 400 with a single power management unit can be implemented using an Ethernet interface 402 from MCU 106 to second MCU (not shown) or to the head end (IFE or MGU) controller 404. The system gets power from a single aircraft power bus 408. The system 400 assigns an IP (Internet Protocol) address to each location and each location reports power consumption to the head end 404 for the zone under its control. The head end 404 would then ENABLE, RESTRICT or DISABLE use based upon a priority control program for the system 400 as a whole. Areas such as first class would preferably always receive power and coach class would generally have more limited power availability. This function could be in another MCU or in an IFE head end controller or any other processing system complying with MCU Ethernet protocol. Similar to the previous system, P2' would be used to place the ISPS units in the DISABLED mode. With multiple MCUs, each MCU can place all ISPS units in the DISABLE mode or can place individual columns 406 in the DISABLE mode. This allows for a method that would offer finer control of the system including prioritized zones that can be configured to never be intentionally DISABLED (i.e. without PED and other power) by the system 400.

An advantage of the embodiments of the present invention is that they utilize power levels to control the maximum power in single and multiple MCU configurations so that users of devices such as personal electronic devices (PEDs) experience less disruption in power than has been previously experienced. Another advantage is that available non-shedable load can be used to supply ISPSs to further minimize the disruption in power to the user. Another advantage of the present invention is that a power managed system better serves passenger needs while staying within aircraft design parameters. Other advantages of the invention will in part be obvious and will in part be apparent from the specification. The aforementioned advantages are illustrative of the advantages of the present invention.

## CONCLUSION

Advantages of the embodiments of the present invention described herein include the utilization of power levels to control the maximum power in single and multiple MCU configurations so that users of devices such as personal electronic devices (PEDs) may experience less disruption in power than has been previously experienced. Another advantage is that available non-shedable load can be used to supply ISPSs to further minimize the disruption in power to the user. Another advantage of the present invention is that a power managed system better serves passenger needs while staying within aircraft design parameters. The aforementioned advantages are illustrative of the advantages of the present invention. While the present invention has been disclosed and described with reference to a various embodiments thereof, it will be apparent, as noted above that variations and modificatioris may be made therein. It is, thus, intended in the following claims to cover each variation and modification that falls within the true spirit and scope of the present invention.

**Claims**

1. An electrical power distribution system comprising:

an electrical power source;
a plurality of outlets for receiving power from said electrical power source; and
a power distribution circuit coupling said electrical power source to each of said plurality of outlets, said power distribution circuit comprising:

a plurality of power sensing circuits for monitoring a total power load in the electrical power distribution system;
a power comparator, coupled to said plurality of power sensing circuits, for summing a total amount of electrical power being drawn by the outlets and for comparing the sum to a first predetermined electrical power level and a second predetermined electrical power level; and
a plurality of power available circuits, each coupled to a corresponding one of said plurality of power sensing circuits and coupled to said power comparator, for providing individual output signals;
and whereby:

each of said plurality of outlets coupled to a corresponding one of said plurality of power available circuits and coupled to a corresponding one of said plurality of power sensing circuits;
each of said plurality of outlets is enabled by said corresponding one of said plurality of power available circuits when said first predetermined electrical power level has not been exceeded;
each of said plurality of outlets not coupled to a power utilizing device are disabled when said first predeteinined electrical power level has been exceeded;
each of said plurality of outlets coupled to a power utilizing device remains enabled by said corresponding one of said plurality of power available circuits when said second predetermined electrical power level has not been exceeded;
each of said plurality of outlets are disabled when said second predetermined electrical power level has been inet or exceeded; and
each of said plurality of outlets coupled to a power utilizing device when the first predetermined electrical power level is met or exceeded remains enabled.

2. There system as claimed in claim 1 whereby each of a plurality of outlets initially coupled to power utilizing devices while the total amount of power to the plurality of outlets was restricted is enabled after performing a disconnect of the power utilizing devices initially coupled to the plurality of outlets while the total amount of power was restricted and a subsequently performing a reconnect of the power utilizing devices initially coupled to the plurality of outlets while the total amount of power was restricted.

3. A method of power distribution comprising:

defining a first predetermined electrical power level and a second predetermined electrical power level;
monitoring a total power consumed by power utilizing devices coupled to selected ones of a plurality of outlets;
monitoring a total power consumed by substantially all nonshedable power utilizing devices
summing a total amount of electrical power consumed by power utilizing devices coupled to the selected ones of a plurality of outlets and the nonsliedable power utilizing devices;
comparing the total amount of electrical power consumed to the first predetermined electrical power level and to the second predetermined electrical power level;
enabling all of the plurality of outlets if the first predetermined electrical power level is not exceeded;
disabling all of the plurality of outlets if the second predetermined electrical power level is met or exceeded;
disabing all of the plurality of outlets notcoupled to a power utilizingdevice if the first predetermined electrical power level is inet or exceeded; and
restncting a total amount of electrical power consumed to all of the plurality of outlets coupled to a power utilizing device when the first predetermined electrical power level is met or exceeded.

4. The method as claimed in claim 3 further comprising the steps of:

disconnecting power utilizing devices that initially coupled to select ones of a plurality of outlets while the total amount of power to the plurality of outlets was restricted;

reconnecting power utilizing devices that initially coupled to select ones of a plurality of outlets while the total amount of power to the plurality of outlets was restricted after disconnecting the power utilizing devices as set forth in the previous step;

whereby the disconnecting and reconnecting of power utilizing devices causes electrical power to be supplied to the power utilizing devices that were initially coupled to the selected ones of a plurality of outlets while the total amount of power to the plurality of outlets was restricted.

5. A method of power distribution comprising:

monitoring a total load generated by power utilizing devices coupled to selected ones of a plurality of outlets;

summing a total amount of electrical power being drawn;

comparing the total amount of electrical power being drawn to a first predetermrned electiical power level and to a second predetermined electrical power level;

disabling all of the plurality of outlets not coupled to a power utilizing device when the total power drawn exceeds the first predetermined electrical power level; and

disabling all of the plurality of outlets when the total power being drawn exceeds the second predetermined electrical power level.

**FIG. 1**

**FIG. 2**

FIG. 3

START — S300

SET POWER THRESHOLDS P1', P2' — S302

S303

ENABLE ISPSs

S312 — OPERATE ISPS IN "DISABLED MODE"

YES $P_c \geq P2'$ ←

IS CONSUMED POWER $P_c \geq P1'$ AND/OR IS $P_c \geq P2'$ ? — S304

NO $P_c < P1'$ → OPERATE ISPS IN "ENABLED MODE" — S303a

YES $P_c \geq P1'$

S314 — IS NON-SHEDDABLE POWER $P_{NS}$ BELOW PRESET THRESHOLD P2' ?

NO $P_{NS} \geq P2'$

YES $P_{NS} < P2'$

B

S306 — DISABLE UNUSED PORTS & SET USED ISPSs TO "RESTRICTED MODE" (USERS THAT ARE CONNECTED AT ONSET OF RESTRICTED MODE REMAIN CONNECTED aka "GRANDFATHERED USERS") THIS LIMITS POWER TO PEDs

S316 — SET ISPSs TO "RESTRICTED MODE" & RE-ENABLE "GRANDFATHERED" USERS ISPSs & UNUSED ISPSs REMAIN DISABLED

S308 — IS CONSUMED POWER $P_c$ BELOW PRESET THRESHOLD P1' ?

NO $P_c \geq P1'$ → CONTINUE TO OPERATE IN MODE SET IN STEP S306 (UNUSED ISPSs REMAIN DISABLED & USED ISPSs ARE RESTRICTED) — S306a

YES $P_c < P1'$

S310 — RETURN ALL ISPSs TO ENABLED MODE

S318 — IS CONSUMED POWER $P_c$ EQUAL TO OR BELOW PRESET THRESHOLD P2' ?

NO $P_c > P2'$

YES $P_c \leq P2'$

S303b — RETURN ALL ISPSs TO ENABLE MODE

S320 — NON-GRANDFATHERED DC ISPS USERS (USERS THAT ARE NOT CONNECTED AT ONSET OF RESTRICTED MODE aka "NON-GRANDFATHERED USERS") THAT CONNECTED DURING RE-ENABLEMENT PERFORM THE FOLLOWING:
A) DISCONNECT DEVICE FOR ISPS
B) RECONNECT DEVICE TO ISPS

A

FIG. 4

EP 1 335 473 A2

FIG. 5

15